# FASCICULE DE BREVET EUROPEEN

(11) **EP 3 431 729 B1**
(45) Date de publication et mention de la délivrance du brevet: **01.04.2020**
(21) Numéro de dépôt: 18179836.4
(22) Date de dépôt: 26.06.2018
(51) Int. Cl.: F01N 3/20, F01N 13/18

(54) **SYSTEME DE REDUCTION SELECTIVE CATALYTIQUE MUNI D'UN DISPOSITIF DE PROTECTION THERMIQUE**
SELEKTIVES KATALYTISCHES REDUKTIONSSYSTEM MIT EINER THERMISCHEN SCHUTZVORRICHTUNG AUSGESTATTET
SELECTIVE CATALYTIC REDUCTION SYSTEM HAVING A THERMAL PROTECTION DEVICE

(30) Priorité: 18.07.2017 FR 1756795
(43) Date de publication de la demande: 23.01.2019
(73) Titulaire: PSA Automobiles SA, 78300 Poissy (FR)
(72) Inventeur: HUREAUX, SEBASTIEN, 70200 MAGNY DANIGON (FR); DROIT, JULIEN, 70000 VAIVRE ET MONTOILLE (FR)

(56) Documents cités:
- DE-A1- 19 625 447
- US-A1- 2009 107 126

## Description

La présente invention porte sur un système de réduction sélective catalytique, dit aussi système SCR (acronyme pour "Selective Catalytic Réduction" en anglais), muni d'un dispositif de protection thermique. L'invention trouve une application particulièrement avantageuse lors du fonctionnement dans des conditions sévères des systèmes SCR de type liquide équipant les véhicules à moteur diesel.

Dans un contexte de dépollution des gaz d'échappement du moteur, les systèmes SCR visent à réduire les oxydes d'azote (NOx) contenus dans les gaz d'échappement. Les systèmes SCR mettent en oeuvre une réaction chimique entre les oxydes d'azote et un agent réducteur prenant classiquement la forme d'ammoniac.

L'injection de l'ammoniac dans la ligne d'échappement des gaz est généralement réalisée par l'intermédiaire d'un précurseur, tel que l'urée qui se décompose en ammoniac et en dioxyde de carbone sous l'effet de la chaleur.

Les systèmes utilisant un agent réducteur sous forme liquide comporte un système de dégivrage pour permettre un fonctionnement en dessous de la température de solidification de l'agent réducteur (de l'ordre de -11°C). Le système de dégivrage est constitué de résistances chauffantes situées dans le réservoir et d'un fil résistif positionné le long de la canalisation. On prévoit également une purge du système à la fin de chaque roulage pour éviter le gel de l'agent réducteur lors du stationnement susceptible d'engendrer la casse de l'injecteur.

Toutefois, dans certaines architectures de véhicule, l'injecteur est exposé à des flux aérauliques importants, en sorte que pour certains points de fonctionnement (à températures froides et vitesses élevées) des portions gelées d'agent réducteur sont susceptibles de se former au niveau de l'embout de connexion de l'injecteur avec la canalisation du système SCR car les résistances chauffantes ne s'étendent pas dans cette zone. Cette formation de glaçons empêche alors l'injection d'agent réducteur, ainsi qu'une purge correcte du circuit en fin de roulage.

Pour éviter ce phénomène, un dispositif isolant flexible de type chaussette vient isoler l'embout de connexion de l'injecteur ainsi que le connecteur correspondant. Toutefois, cette chaussette arrivant livrée en bord de ligne de montage, elle nécessite une phase finale de pliage avant d'être montée complétement sur l'extrémité de la canalisation SCR et de la zone de connexion sur injecteur SCR. Cette opération impose une méthodologie de mise en place associée à un contrôle visuel qui est longue et coûteuse à mettre en oeuvre en usine de fabrication. En outre, certains environnements en zone Injecteur et échappement présentent des contraintes d'encombrement telles, qu'il n'est pas possible d'installer la chaussette isolante autour de l'embout de connexion de l'injecteur. Le document DE19625447 divulgue l'utilisation d'un capot encliqueté sur le corps de l'injecteur au moyen d'une pince unique.

L'invention vise à remédier efficacement à cet inconvénient en proposant un système de réduction catalytique pour une ligne d'échappement de moteur thermique selon les caractéristiques de la revendication 1.

L'invention permet ainsi, grâce à la fixation par encliquetage, de faciliter le montage du dispositif sur l'injecteur et d'autoriser son implantation dans des environnements à fortes contraintes d'encombrement. L'invention permet également de réduire la durée allouée à l'assemblage du dispositif, dans la mesure où elle ne nécessite pas de préparation hors ligne comme cela est le cas avec une chaussette isolante. L'invention présente également l'avantage de s'assurer de la mise en place correcte du dispositif sur l'injecteur par un contrôle auditif. L'invention présente également un caractère économique car son prix de revient est faible.

Selon une réalisation, le capot comporte deux parois en regard l'une de l'autre reliées entre elles par une paroi de liaison de manière à présenter globalement une forme en U.

Selon une réalisation, le capot est réalisé dans un matériau thermiquement conducteur, notamment en métal.

Selon une réalisation, chaque bras de la pince comporte un bec du côté de son extrémité libre.

Selon une réalisation, la première pince coopère avec une nervure issue du corps de l'injecteur.

Selon une réalisation, les bras de la première pince comportent chacun une fenêtre recevant la nervure ménagée dans la zone d'encliquetage.

Selon une réalisation, la deuxième pince coopère avec un méplat ménagé dans le corps de l'injecteur.

L'invention a également pour objet une ligne d'échappement comportant un système de réduction catalytique tel que défini précédemment.

L'invention sera mieux comprise à la lecture de la description qui suit et à l'examen des figures qui l'accompagnent. Ces figures ne sont données qu'à titre illustratif mais nullement limitatif de l'invention.
La figure 1 est une représentation schématique d'un système de réduction sélective catalytique selon la présente invention;
La figure 2 est une vue en perspective détaillée d'un dispositif de protection thermique selon la présente invention monté sur un injecteur du système de réduction sélective catalytique;
La figure 3 est une vue en perspective détaillée du dispositif de protection thermique selon la présente invention s'étendant autour d'un connecteur du système SCR.

Les éléments identiques, similaires, ou analogues conservent la même référence d'une figure à l'autre.

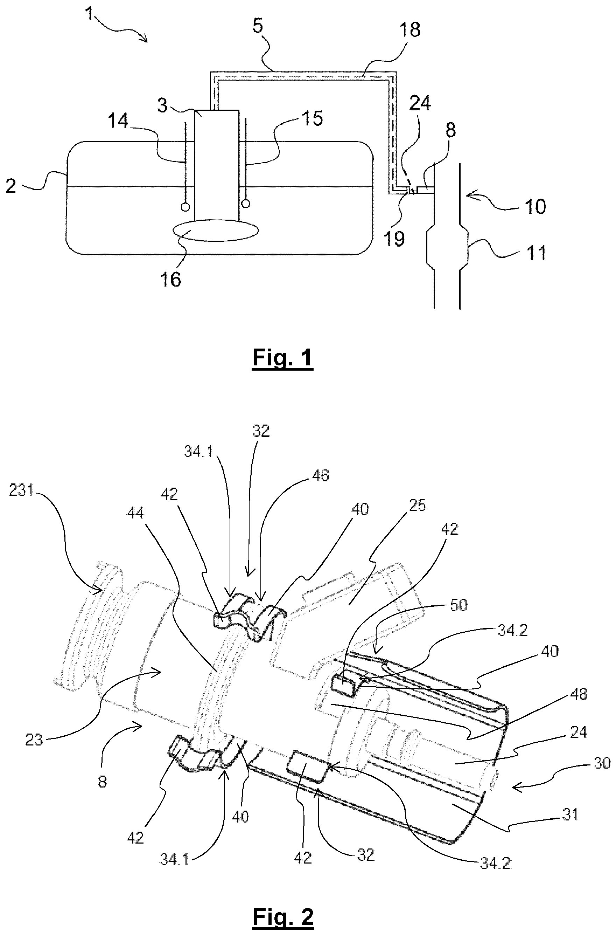

La figure 1 montre un système de réduction catalytique 1, dit aussi système SCR (acronyme pour "Selective Catalytic Réduction" en anglais), comportant au moins un réservoir 2 de stockage d'un agent réducteur sous forme liquide, une pompe 3 généralement réversible, ainsi qu'au moins une canalisation 5 reliant la pompe 3 à un injecteur 8 destiné à injecter de l'agent réducteur dans une ligne d'échappement 10 de moteur thermique. L'injecteur 8 est positionné en amont d'un catalyseur 11. En outre, le réservoir 2 contient un capteur de niveau 14, un capteur de température 15, et des résistances chauffantes 16 appartenant à un système de dégivrage. Ce système de dégivrage comporte en outre un fil résistif 18 positionné le long de la canalisation 5.

Comme cela est représenté sur la figure 2, l'injecteur 8 comprend un corps 23 et un embout de connexion 24. L'embout de connexion 24 fixé sur le corps 23 est connecté à une extrémité de la canalisation 5 via un connecteur 19. Ce connecteur 19 est par exemple un connecteur encliquetable rapide (dit "Quick Connect" en anglais).

Le corps 23 comporte une extrémité avant 231 adaptée à coopérer avec une interface de forme complémentaire pour sa fixation sur la ligne d'échappement 10 au moyen d'un collier de serrage. En outre, un connecteur 25 est destiné à assurer l'alimentation et le pilotage de l'injecteur 8.

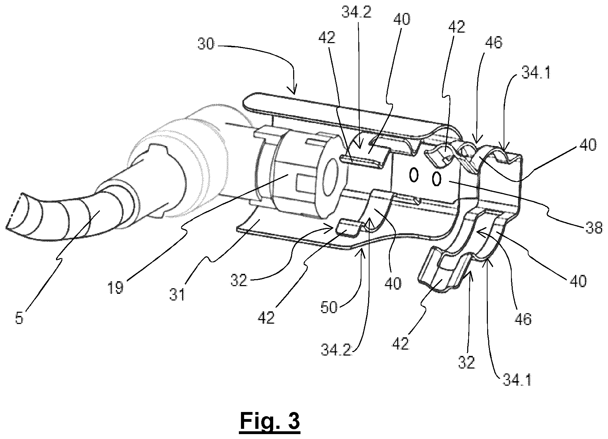

Comme cela est représenté sur les figures 2 et 3, un dispositif de protection thermique 30 comporte un capot 31 entourant au moins en partie l'embout de connexion 24 de l'injecteur 8 et le connecteur 19 de la canalisation 5. Ce capot 31 est associé à un dispositif de fixation 32 par encliquetage sur le corps 23 de l'injecteur 8.

Le capot 31 comporte deux parois en regard l'une de l'autre reliées entre elles par une paroi de liaison de manière à présenter globalement une forme en U. Le capot 31 est réalisé dans un matériau thermiquement conducteur, notamment en métal. Cela permet de récupérer de la chaleur générée par la ligne d'échappement 10 (l'injecteur présentant son extrémité 231 en contact avec la ligne 10) et de l'acheminer par conduction dans la zone froide constituée par l'ensemble embout de connexion 24 et connecteur 19.

Par ailleurs, le dispositif de fixation par encliquetage 32 comporte deux pinces 34.1, 34.2 globalement en forme de C issues d'un support 38 fixé sur une face interne du capot 31. En variante, les pinces 34.1, 34.2 sont monoblocs avec le support 38 en venant de matière de la même pièce. En l'occurrence, les pinces 34.1, 34.2 sont situées de part et d'autre du connecteur 25 mais elles pourraient alternativement être situées d'un même côté du connecteur 25.

Plus précisément, chaque pince 34.1, 34.2 en forme de C est munie de deux bras 40 élastiquement déformables situés en vis-à-vis l'un par rapport à l'autre. Les extrémités libres des bras 40 sont espacées l'une par rapport à l'autre pour permettre l'insertion du corps 23 de l'injecteur 8 entre les bras 40 par déformation élastique des bras 40.

En position non contrainte, une plus petite dimension entre les deux bras 40 de la pince 34.1, 34.2 est inférieure à la plus grande dimension du corps 23 de l'injecteur 8 dans la zone d'encliquetage correspondante destinée à recevoir la pince 34.1, 34.2. Lors la mise en place du capot 31, les bras 40 de la pince 34.1, 34.2 s'écartent l'un par rapport à l'autre par déformation élastique lors de l'insertion de l'injecteur 8, puis se rapprochent l'un de l'autre de manière à enserrer une portion de la circonférence externe du corps 23 de l'injecteur 8. La mise en place correcte du capot 31 peut être contrôlée par le son que produit la pièce métallique 30 lorsque l'injecteur 8 entre en contact avec le fond du capot 31.

Avantageusement, chaque bras 40 de la pince 34.1, 34.2 comporte un bec 42 du côté de son extrémité libre formant un angle non nul avec la portion du bras 40 destinée à être positionnée autour du corps 23 de l'injecteur 8. Les deux becs 42 de la pince 34.1, 34.2 délimitent une ouverture évasée facilitant l'installation du dispositif de protection thermique 30.

Comme on peut le voir sur la figure 2, la pince 34.1 est destinée à coopérer avec une nervure saillante 44 issue du corps 23 de l'injecteur 8 qui présente une forme annulaire. A cet effet, les bras 40 de la pince 34.1 comportent chacun une fenêtre 46 destinée à recevoir la nervure 44 ménagée dans la zone d'encliquetage. La liaison entre la nervure 44 et la fenêtre 46 permet d'assurer un blocage en translation du capot 31. La fenêtre 46 s'étend avantageusement jusqu'aux becs 42 pour permettre le centrage des pinces 34.1 sur la nervure 44 de l'injecteur 8.

Par ailleurs, la pince 34.2 est destinée à coopérer avec un méplat 48 ménagé dans le corps 23 de l'injecteur 8. Les bras 40 de la pince 34.2 présentent des largeurs différentes afin de jouer un rôle de détrompeur lors de l'installation du capot 31. La pince 34.2 a pour fonction de verrouiller le dispositif 30 sur le corps 23 de l'injecteur 8 en bloquant le mouvement possible dans les degrés de liberté laissés par la pince 34.1.

En outre, une échancrure 50 est ménagée dans un bord du capot 31 pour autoriser le passage du connecteur 25. Ce dernier, du fait de son appui contre un bord de l'échancrure 50, assure un blocage en rotation du capot 31 autour de l'axe du connecteur 25.

## Revendications

1. Système de réduction catalytique (1) pour une ligne d'échappement (10) de moteur thermique comportant:
- un injecteur (8) apte à injecter une quantité d'agent réducteur,
- l'injecteur (8) ayant un corps (23) et un embout de connexion (24) coopérant avec un connecteur (19) d'une canalisation (5) acheminant l'agent réducteur jusqu'audit injecteur (8), ledit système de réduction catalytique (1) comportant en outre un dispositif de protection thermique (30) comprenant:
- un capot (31) entourant au moins en partie l'embout de connexion (24) de l'injecteur (8) et le connecteur (19) de la canalisation (5), et
- un dispositif de fixation (32) par encliquetage sur le corps (23) de l'injecteur (8) qui comporte au moins une pince (34.1, 34.2) munie de deux bras (40) élastiquement déformables situés en vis-à-vis l'un par rapport à l'autre, ledit capot (31) étant réalisé dans un matériau thermiquement conducteur et conformé pour récupérer de la chaleur générée par ladite ligne d'échappement (10) et l'acheminer par conduction dans la zone froide constituée par l'ensemble embout de connexion (24) et connecteur (19), **caractérisé en ce que** le dispositif de fixation (32) par encliquetage comporte une première (34.1) et une deuxième (34.2) pinces.

2. Système selon la revendication 1, **caractérisé en ce que** le capot (31) comporte deux parois en regard l'une de l'autre reliées entre elles par une paroi de liaison de manière à présenter globalement une forme en U.

3. Système selon la revendication 1 ou 2, **caractérisé en ce que** le capot (31) est réalisé dans un matériau thermiquement conducteur, notamment en métal.

4. Système selon l'une quelconque des revendications précédentes, **caractérisé en ce que** chaque bras (40) de la pince (34.1, 34.2) comporte un bec (42) du côté de son extrémité libre.

5. Système selon la revendication 6, **caractérisé en ce que** la première pince (34.1) coopère avec une nervure (44) issue du corps (23) de l'injecteur (8).

6. Système selon la revendication 7, **caractérisé en ce que** les bras (40) de la première pince (34.1) comportent chacun une fenêtre (46) recevant la nervure (44) ménagée dans la zone d'encliquetage.

7. Système selon l'une quelconque des revendications 6 à 8, **caractérisé en ce que** la deuxième pince (34.2) coopère avec un méplat (48) ménagé dans le corps (23) de l'injecteur (8).

8. Ligne d'échappement (10) comportant un système de réduction catalytique (1) tel que défini selon l'une quelconque des revendications 1 à 9.

## Patentansprüche

1. Katalytisches Reduktionssystem (1) für einen Abgasstrang (10) einer Brennkraftmaschine, das Folgendes umfasst:
- eine Düse (8), der geeignet ist, eine Reduktionsmittelmenge einzuspritzen,
- wobei die Düse (8) einen Körper (23) und einen Verbindungseinsatz (24) aufweist, der mit einem Steckverbinder (19) einer Kanalisation (5) zusammenwirkt, die das Reduktionsmittel bis zu der Düse (8) fördert, wobei das katalytische Reduktionssystem (1) außerdem eine thermische Schutzvorrichtung (30) umfasst, die Folgendes umfasst:
- eine Haube (31), die den Verbindungseinsatz (24) der Düse (8) und den Steckverbinder (19) der Kanalisation (5) mindestens teilweise umgibt, und
- eine Befestigungsvorrichtung (32) durch Einrasten auf dem Körper (23) der Düse (8), die mindestens eine Zange (34.1, 34.2) umfasst, die mit zwei Armen (40) versehen ist, die elastisch verformbar sind, die einander gegenüberliegen, wobei die Haube (31) aus einem wärmeleitenden Material hergestellt und ausgestaltet ist, um Wärme aufzunehmen, die von dem Abgasstrang (10) erzeugt wird, und sie durch Leitung in die kalte Zone zu fördern, die aus der Einheit aus Verbindungseinsatz (24) und Steckverbinder (19) besteht, **dadurch gekennzeichnet, dass** die Befestigungsvorrichtung (32) durch Einrasten eine erste (34.1) und eine zweite (34.2) Zange umfasst.

2. System nach Anspruch 1, **dadurch gekennzeichnet, dass** die Haube (31) zwei Wände einander gegenüber umfasst, die miteinander durch eine Verbindungswand verbunden sind, so dass sie insgesamt eine U-Form aufweisen.

3. System nach Anspruch 1 oder 2, **dadurch gekennzeichnet, dass** die Haube (31) aus einem wärmeleitenden Material, insbesondere aus Metall, hergestellt ist.

4. System nach einem der vorstehenden Ansprüche, **dadurch gekennzeichnet, dass** jeder Arm (40) der Zange (34.1, 34.2) einen Schnabel (42) auf der Seite seines freien Endes umfasst.

5. System nach Anspruch 6, **dadurch gekennzeichnet, dass** die erste Zange (34.1) mit einer Rippe (44), die aus dem Körper (23) der Düse hervorgeht (8) zusammenwirkt.

6. System nach Anspruch 7, **dadurch gekennzeichnet, dass** die Arme (40) der ersten Zange (34.1) jeweils ein Fenster (46) umfassen, das die Rippe (44), die in der Einrastzone eingerichtet ist, empfängt.

7. System nach einem der Ansprüche 6 bis 8, **dadurch gekennzeichnet, dass** die zweite Zange (34.2) mit einem Flachteil (48), das in dem Körper (23) der Düse (8) eingerichtet ist, zusammenwirkt.

8. Abgasstrang (10), der ein katalytisches Reduktionssystem (1) wie nach einem der Ansprüche 1 bis 9 definiert umfasst.

## Claims

1. A catalytic reduction system (1) for an exhaust line (10) of a heat engine, comprising:
- an injector (8) able to inject a quantity of reducing agent,
- the injector (8) having a body (23) and a connection end-piece (24) cooperating with a connector (19) of a duct (5) conveying the reducing agent to said injector (8), said catalytic reduction system (1) further comprising a thermal protection device (30) including:
- cover (31) surrounding at least partially the connection end-piece (24) of the injector (8) and the connector (19) of the duct (5), and
- an attachment device (32) by snap-fastening on the body (23) of the injector (8) which comprises at least one clip (34.1, 34.2) provided with two elastically deformable arms (40) situated facing one another, said cover (31) being made from a thermally conductive material and configured to recover heat generated by said exhaust line (10) and to convey it by conduction in the cold zone constituted by the assembly of connection end-piece (24) and connector (19), **characterized in that** the attachment device (32) by snap-fastening comprises a first (34.1) and a second (34.2) clip.

2. The system according to Claim 1, **characterized in that** the cover (31) comprises two walls facing one another, connected with one another by a connecting wall so as to present as a whole a U shape.

3. The system according to Claim 1 or 2, **characterized in that** the cover (31) is made from a thermally conductive material, in particular of metal.

4. The system according to any one of the preceding claims, **characterized in that** each arm (40) of the clip (34.1, 34.2) comprises a nose (42) at its free end.

5. The system according to Claim 6, **characterized in that** the first clip (34.1) cooperates with a rib (44) originating from the body (23) of the injector (8).

6. The system according to Claim 7, **characterized in that** the arms (40) of the first clip (34.1) each comprise a window (46) receiving the rib (44) arranged in the snap-fastening zone.

7. The system according to any one of Claims 6 to 8, **characterized in that** the second clip (34.2) cooperates with a flat area (48) arranged in the body (23) of the injector (8).

8. An exhaust line (10) comprising a catalytic reduction system (1) as defined according to any one of Claims 1 to 9.
